**Europäisches Patentamt**

(19) **European Patent Office**

**Office européen des brevets**

(11) Publication number: **0 145 683**
**B1**

(12) **EUROPEAN PATENT SPECIFICATION**

(45) Date of publication of patent specification: **07.01.88**

(21) Application number: **84850281.1**

(22) Date of filing: **24.09.84**

(51) Int. Cl.⁴: **B 25 J 9/18**

(54) **Industrial robot.**

(30) Priority: **30.09.83 SE 8305378**

(43) Date of publication of application:
**19.06.85 Bulletin 85/25**

(45) Publication of the grant of the patent:
**07.01.88 Bulletin 88/01**

(84) Designated Contracting States:
**DE FR GB SE**

(56) References cited:
**EP-A-0 056 507**
**EP-B-0 023 864**
**US-A-3 742 143**

(73) Proprietor: **ASEA AB**
**S-721 83 Västeras (SE)**

(72) Inventor: **Brantmark, Hakan**
**Snödroppsvägen 41**
**S-72243 Västeras (SE)**
Inventor: **Hardegard, Eric**
**Stövarvägen 8**
**S-72243 Västeras (SE)**

(74) Representative: **Grennberg, Erik Bertil et al**
**H ALBIHNS PATENTBYRA AB Box 7664**
**S-103 94 Stockholm (SE)**

Courier Press, Leamington Spa, England.

## Description

The invention relates to an industrial robot of the kind disclosed in the preamble to the accompanying Claim 1. Such robots are previously known and widely spread in various fields of industry. Programming normally takes place in that the robot is caused by an operator, while guiding it moment by moment, to perform a specific series of operation. In certain cases the operator thereby grips around the robot's arm to make it execute a desired pattern of movement, although it has been found more beneficial for this purpose to use a programming device provided with a joystick.

A joystick is a suitable instrument for two-dimensional generation of analog signals. A third dimension can be added by turning the control knob of a joystick, producing in this way a signal which is then independent of the two "x—y signals". More than three dimensions however cannot be controlled with the aid of a joystick. Taking into consideration the three longitudinal dimensions of a room, plus the additional turns, a robot must be controllable in a plurality of other dimensions, and for this reason the significance of the joystick movements must be variable by adjustment. The programming device of prior art industrial robots has therefore been provided with a push-button set for adjustment of the control mechanism.

Although the function of such a known system is otherwise satisfactory, there is the disadvantage that the operator must be very well trained on the equipment in order to readily and quickly perform a programming operation. It would be desirable therefore to have a system affording extended possibilities of cooperation between the system and the operator. It would furthermore be desirable to let the operator concentrate all his visual attention to the robot itself, increasing thereby the operational speed as well as improving the pattern of movement for the robot.

These and other objects and advantages to be described in the following can be achieved according to the invention by equipping an industrial robot of the kind mentioned by way of introduction in the way disclosed in the characterizing clause of Claim 1.

Speech analysis and speech synthesis devices are previously known and commercially available. A particular difficulty in this known equipment is associated with the fact that a powerful computer support is generally required for the recognition of human speech. Therefore, to create the fundamental condition for a final solution of the practical problems, the device should not have to recognize too many different commands. In practice at present, the use of a speech analyzer of the kind available on the market at a reasonable cost is in fact based on the condition that the operator himself has initially dictated each single command into the device for enabling it later to identify said command upon repetition. It is then also understood that the number of commands to be searched for identification, when reading in a command, must not be too great.

As a purely practical measure for settling the inventive problem, the number of possible commands in each instant must be restricted, and in many cases less than the total number of commands used for the programming sequence. According to the invention, this is achieved by means of a branched programming system. At start there is made a choice for example between a restricted number of basic conditions each of which being associated with a likewise restricted number of functions, etc. obtaining in this way a system of tree-shaped configuration.

The speech synthesizer is preferably permitted to read aloud a list of all the commands available to the operator when making his choice, while also emitting a receipt signal by repeating a given command. Alternatively, a display unit can be arranged indicating the last-given command. Furthermore, it should suitably be possible for the operator to make the speech synthesizer repeat its last-spoken phrase.

The invention will now be described on the basis of a non-limiting exemplary embodiment illustrated in the drawings. Fig. 1 shows an example of a robot's arm provided with gripping means. Fig. 2 shows schematically a block diagram for the invention. Fig. 3 shows an example of an operational sequence with an associated program. Fig. 4 shows an example of a branch program, and Fig. 5 shows the various alternatives in a basic condition of the program.

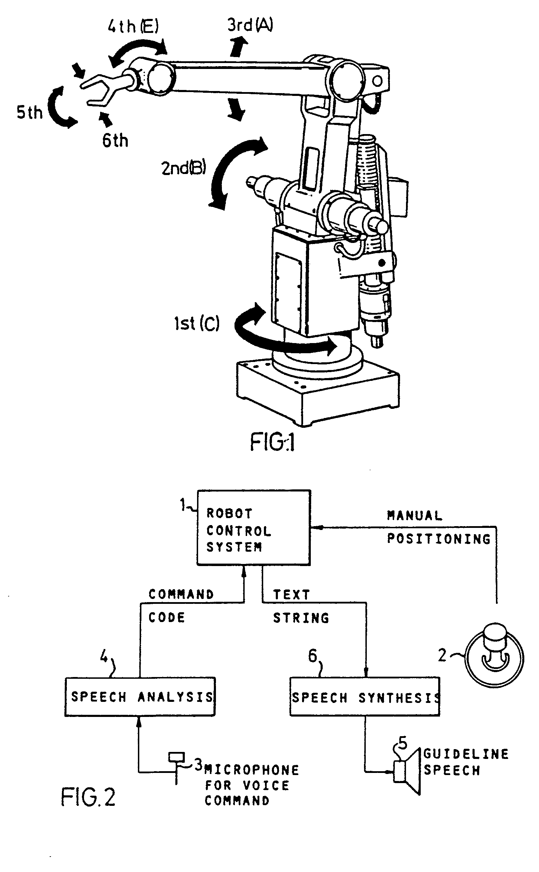

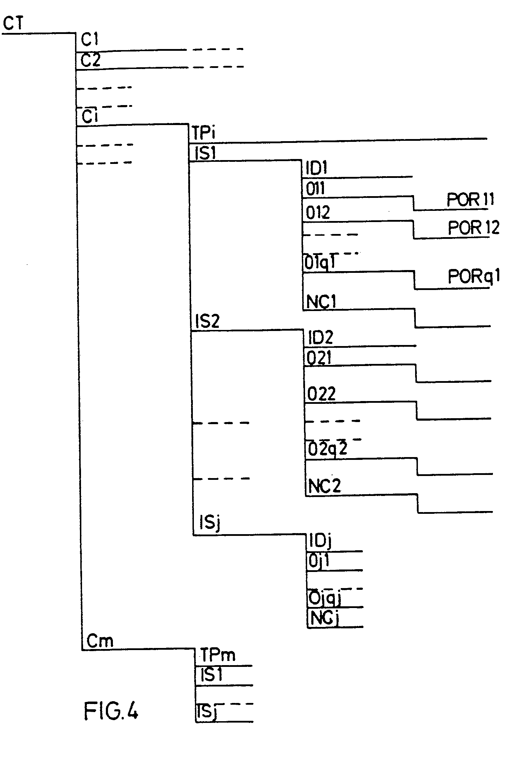

A robot arm of the immediately considered type is shown in Fig. 1. The arrows indicate various alternatives of movement, giving rise to six generally independent degrees of freedom. For each rotational axis there is accommodated a motor and a sensor, these parts together being connected to a control unit (computer) for enabling a programmed movement of all motors. It is clearly seen that all movements are basically rotary, but it is known that combined rectilinear movements can be obtained by programming. When controlling the movements with the use of a joystick, either direct control of two or three rotational axes can be selected for an "economic" displacement of the tool center point, or indirect control in rectangular Cartesian coordinates can be selected demanding however a heavier computer support for its performance and resulting sometimes in a certain delay. This selection of coordinate system is normally included in the alternatives according to the invention.

An essential feature of the invention is illustrated in Fig. 2. A robotic control system 1 is connected to the various arrangements of movement in a robot according to Fig. 1, each "degree of freedom" being individually controlled and monitored under the guidance and coordination of the control system 1. In automatic operation this is conventionally done by using computer programs capable of receiving sensory signals as well, responding for exammple to touch or the like. This is all prior art technique however and will therefore not be further discussed.

The invention instead relates to control and programming of the system. Fig. 2 illustrates a joystick 2 which can be used for programming patterns of movement. To some extent, the use of joysticks is also part of known technique insofar as such instruments have been previously used.

The novel feature however resides in that programming occurs, in accordance with the invention, while utilizing a microphone 3 connected to a speech analyzer 4, and in that the control system 1 can transmit spoken messages with the aid of a speech synthesizer 6 and a loudspeaker 5. Normally, the operator carries a pair of earphones to which is connected a microphone disposed close to his mouth.

The speech analyzer 4 and the speech synthesizer 6 are both devices available on the market. For a constructional embodiment there are thus used a speech analyzer INFOVOX RA—101 and a speech synthesizer INFOVOX SA—101, both manufactured by Infovox AB, Svenska Utvecklingsbolaget AB, Stockholm. According to the manufacturer, the speech analyzer may recognize words and phrases having a maximum duration of 2.5 seconds. Upon recognition, the unit emits to the control system 1, via a V24 standard output, an electric code associated with the recognized phrase. The synthesizing device 6 functions as follows. When the control system transmits a text string in the form of coded common characters, this code is synthesized via said device into speech while applying the pronunciation rules appropriate for e.g. Swedish, English or any other language.

As already mentioned, the analysis equipment is utilized quite specifically for safeguarding optimum security. There is thus arranged for the analyzer 4 to expect at each instance only a limited number of commands, and a command dictated into the microphone will be compared with just a few patterns stored in the memory. Since "identity" is determined by correlation between patterns, the correlation coefficient for accepted identification can therefore in practice be set to a lower value, resulting as well in a quicker recognition.

Reading into the analyzer 4 is performed by the operator pronouncing each phrase five times for example, registering thereby an average for the pattern which will serve as a basis for the comparisons.

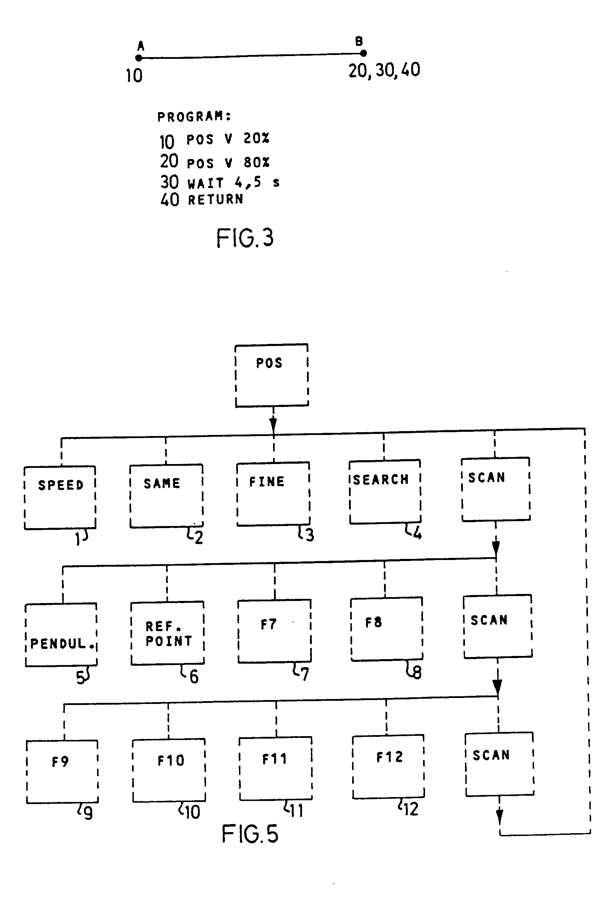

In order to give a simple picture of the programming, an example will now be shown with reference to Fig. 3. The task is here to displace the tool center point of the arm from one point A to another point B, leaving it at B for 4.5 seconds and then allowing it to return. The program is conventionally indicated in the figure. In practice, a programming sequence is performed as follows. The operator talks into the microphone 3 according to Fig. 2, saying the word "POSITION". If desired, the synthesizer can then be made to repeat the said command. As will be seen in the following, this command signifies that the monitoring program in the control unit 1 is set to one of numerous basic conditions, and that a small number of commands is now available. If he is unsure, the operator can make the speech synthesizer 6 read these commands by saying "SCAN". Let us suppose however that he knows what he wants in this case, and that he gives the command "SPEED". The speech analyzer will now expect digits. The operator dictates "TWO", "ZERO", and "READ IN". In this way the speed of the arm has been set to reach 20% of the maximum rate. (It is presupposed here that the actual coordinate system has been selected for the joystick 2, to keep it prepared). The robot's arm can now be moved by the operator gripping the joystick 2 situated on a small box, not shown, which can be held in his hand. In this way the robot's tool center point is displaced from A to B. Thereafter the operator commands "POSITION" and returns to the primary basic condition, i.e. the commands "SPEED", "EIGHT", "ZERO", and "READ IN". The robot's arm is now programmed for waiting. This is done first by commanding "FUNCTION" which relates to a basic condition, and then "WAIT" which is included among the permitted functions, i.e. "TIME" and "FOUR", "COMMA", "FIVE" and "READ IN". A waiting time of 4.5 seconds has then been read into the programming sequence. Now is the moment for return to the starting point A. The commands "FUNCTION" and "RETURN" are now read in, and the small programming sequence is finally recorded. This program is of course extremely simplified but well suited to explaining the function of the invention while also demonstrating its advantages.

The program in the robotic system 1 thus has a level-like structure of which the uppermost levels may be called the basic conditions, wherein a branched selection is made for each individual condition. Fig. 4 illustrates the fundamental principle thereof. Of the commands used above, "POSITION" and "FUNCTION" will be found among the branches C1, C2 . . . Ci . . . Cm in Fig. 4. Suppose for example that "POSITION" is represented by Ci. In this basic condition there is then a choice between several subordinate conditions TPi, IS1 . . . ISj which generally permit additional subsidiary conditions, etc. Fig. 5 shows for example the various branches possible in the basic condition "POSITION". If "SPEED" is selected, then the control unit will expect to receive digits followed by the end command "READ IN".

It is possible to utilize character windows and the like together with the invention for elucidating the various programming steps, whereby a character window or an alphanumeric table can be arranged on a control box, or on the box carried by the operator and in which is mounted the joystick 2 shown in Fig. 2.

With the inventive combination of a program structured into tree-shape, which provides recognition of commands via a speech analyzer adapted thereto, and a speech synthesizer equipment, an extremely practical interactive programming will be achieved. The very concreteness of the system makes it available for use by operators lacking all essential programming experience, and the system can be taught in practice in only a few hours' time to an operator, whose skill will then be quite sufficient for normal industrial operation.

## Claims

1. Industrial robot, movable in several degrees of freedom (Fig. 1) and co-acting with a programmable control computer (1) with associated programming means which include a joystick (2) intended during programming to make the robot perform arbitrary movements and programming said movements into the control computer for creating an operational program therein, characterized by the combination of a microphone (3) and a speech analyzer (4) connected to it for reading in of oral commands to be subsequently recognized for sending preset control signals associated with each such command, and a speech synthesizer (6) connected to a sound sensor (5) for sending spoken messages to an operator, a command memory in the control computer (1) having a branched structure so that a primary command (C1—Cm), being one of a predetermined set, is arranged to select a subgroup (TPi, IS1 ... ISj) comprising a predetermined number of commands, the speech analyzer (4) being adapted to recognize at each instant only the commands permitted in consideration to a set branch point.

2. Industrial robot as claimed in Claim 1, characterized in that its speech synthesizer (6) is adaptable for repeating each command read into the microphone (3) and recognized in the speech analyzer (4).

## Patentansprüche

1. Industrieroboter, der in mehreren Freiheitsgraden (Figur 1) bewegbar ist und mit einem programmierbaren Steuercomputer (1) mit zugehörigen Programmiereinrichtungen zusammenarbeitet, zu denen ein Steuerhebel (2) gehört, mit welchem der Roboter während der Programmierung so gesteuert werden kann, daß er beliebige Bewegungsabläufe ausführt, die im Steuercomputer zur Erstellung eines Betriebsprogrammes im Computer gespeichert werden, dadurch gekennzeichnet, daß eine Kombination aus einem Mikrophon (3) und einem daran angeschlossenen Sprachanalysator (4) zur Eingabe gesprochener Befehle vorhanden ist, die anschließend identifiziert werden zwecks Aussendung vorgegebener, jedem solcher Befehle zugeordneter Steuersignale, daß ein Sprach-Synthesizer (6) vorhanden ist, der an einen akustischen Signalgeber (5) angeschlossen ist zur Aussendung von gesprochenen Meldungen an die Bedienungsperson, daß im Steuercomputer (1) ein Befehlsspeicher mit einem verzweigten Aufbau der Art vorhandener ist, daß ein erster Befehl (C1—Cm), der zu einem vorgegebenen Satz von Befehlen gehört, eine Untergruppe, bestehend aus einer vorbestimmten Anzahl von Befehlen (TPi, IS1 ... ISj), auswählt, und daß der Sprachanalysator (4) so beschaffen ist, daß er in jedem Augenblick nur die Befehle erkennt, die im Hinblick auf einem vorgegebenen Verzweigungspunkt zugelassen sind.

2. Industrieroboter nach Anspruch 1, dadurch gekennzeichnet, daß der Sprach-Synthesizer (6) imstande ist, jeden Befehl, der in das Mikrophon (3) eingegeben und vom Sprachanalysator (4) erkannt wird, zu wiederholen.

## Revendications

1. Robot industriel, mobile selon plusieurs degrés de liberté (Figure 1) et coopérant avec un ordinateur de commande programmable (1) équipé de moyens de programmation associés qui comprennent un manche à balai (2) dont l'utilisation est prévue pendant la programmation, pour faire accomplir des mouvements arbitraires au robot, et pour programmer ces mouvements dans l'ordinateur de commande afin de créer un programme fonctionnel dans ce dernier, caractérisé par la combinaison d'un microphone (3) et d'un analyseur de parole (4) connecté à ce dernier, pour introduire des ordres oraux devant être reconnus ultérieurement pour émettre des signaux de commande prédéterminés et qui sont associés à chacun de ces ordres, et d'un synthétiseur de parole (6) connecté à un transducteur sonore (5), pour émettre des messages parlés vers un opérateur, l'ordinateur de commande (1) comportant une mémoire d'ordre ayant une structure en arbre, de façon qu'un ordre primaire (C1—Cm), qui fait partie d'un ensemble prédéterminé, permette de sélectionner un sous-groupe (TPi, IS1, ... ISj) comprenant un nombre d'ordre prédéterminé, et l'analyseur de parole (4) étant conçu de façon à ne reconnaître à chaque instant que les ordres dont la prise en considération est autorisée à un point donné dans la structure en arbre.

2. Robot industriel suivant la revendication 1, caractérisé en ce que son synthétiseur de parole (6) est capable de répéter chaque ordre prononcé dans le microphone (3) et reconnu dans l'analyseur de parole (4).

FIG.1

FIG.2

CT

C1

C2

Ci

TPi

IS1

ID1

O11     POR 11

O12     POR 12

O1q1     PORq1

NC1

IS2

ID2

O21

O22

O2q2

NC2

ISj

IDj

Oj1

Ojqj

NCj

Cm

TPm

IS1

ISj

FIG.4

A ●———————————————● B
10                    20, 30, 40

PROGRAM:
10 POS V 20%
20 POS V 80%
30 WAIT 4,5 s
40 RETURN

FIG.3

```
                        ┌──────────┐
                        │   POS    │
                        └────┬─────┘
                             ▼
  ┌────────┬────────┬────────┬────────┬───────────────────────────┐
  │        │        │        │        │                           │
┌──────┐ ┌──────┐ ┌──────┐ ┌────────┐ ┌──────┐                    │
│SPEED │ │ SAME │ │ FINE │ │SEARCH  │ │ SCAN │                    │
└────┘ └────┘ └────┘ └────┘ └──┬──┘                    │
     1⌡       ⌡2       ⌡3        ⌡4        ▼                       │
  ┌────────┬────────┬────────┬────────┐                           │
  │        │        │        │        │                           │
┌────────┐ ┌────────┐ ┌──────┐ ┌──────┐ ┌──────┐                  │
│PENDUL. │ │ REF.   │ │  F7  │ │  F8  │ │ SCAN │                  │
│        │ │ POINT  │ │      │ │      │ └──┬──┘                  │
└──┘ └──┘ └──┘ └──┘        ▼                      │
   5⌡         ⌡6        ⌡7        ⌡8                               │
  ┌────────┬────────┬────────┬────────┐                           │
  │        │        │        │        │                           │
┌──────┐ ┌──────┐ ┌──────┐ ┌──────┐ ┌──────┐                      │
│  F9  │ │ F10  │ │ F11  │ │ F12  │ │ SCAN │                      │
└──┘ └──┘ └──┘ └──┘ └──┬──┘                      │
   ⌡9        ⌡10       ⌡11       ⌡12       ▼                       │
                                           └───────────────────────┘
```

FIG.5